(19) Europäisches Patentamt
European Patent Office
Office européen des brevets

(11) **EP 2 278 438 B1**

(12) **EUROPEAN PATENT SPECIFICATION**

(45) Date of publication and mention
of the grant of the patent:
**28.01.2015 Bulletin 2015/05**

(51) Int Cl.:
*G06F 3/041* *(2006.01)*    *G06F 3/044* *(2006.01)*

(21) Application number: **09754950.5**

(22) Date of filing: **03.04.2009**

(86) International application number:
**PCT/KR2009/001716**

(87) International publication number:
**WO 2009/145485 (03.12.2009 Gazette 2009/49)**

(54) **CONTACT SENSING DEVICE WITH IMPROVED EDGE POSITION RECOGNITION CHARACTERISTICS**

KONTAKTERFASSUNGSVORRICHTUNG MIT VERBESSERTEN KANTENPOSITIONSERKENNUNGSEIGENSCHAFTEN

DISPOSITIF DE DÉTECTION DE CONTACT PRÉSENTANT DES CARACTÉRISTIQUES AMÉLIORÉES DE RECONNAISSANCE DE POSITION MARGINALE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **04.04.2008   KR 20080031624**

(43) Date of publication of application:
**26.01.2011   Bulletin 2011/04**

(73) Proprietor: **Melfas Inc.**
**Seoul 153-801 (KR)**

(72) Inventors:
• **RYU, Shiwon**
**Seoul 153-801 (KR)**
• **NAM, Sung-Sik**
**Seoul 153-801 (KR)**

(74) Representative: **Rupprecht, Kay et al**
**Meissner, Bolte & Partner GbR**
**Widenmayerstraße 47**
**80538 München (DE)**

(56) References cited:
**WO-A1-2007/043756      WO-A2-2009/108765**
**KR-B1- 100 627 174      US-A1- 2006 233 557**
**US-A1- 2007 222 766      US-A1- 2007 247 443**
**US-B1- 6 188 391      US-B2- 7 348 966**

EP 2 278 438 B1

**Description**

Technical Field

The present invention relates to a touch sensing apparatus including an input region having a fixed size, for example a touch pad or a touch screen, and having a function of determining a touch position on the input region touched by a user, and provides a sensor electrode pattern structure that may enhance touch position recognition characteristics in an edge portion of the input region.

Background Art

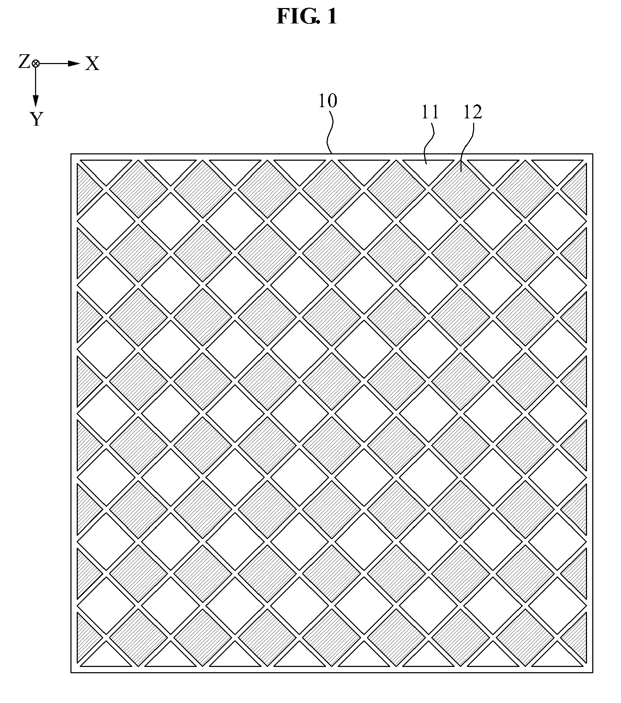

Most of touch sensing apparatuses having a touch position recognition function include a plurality of sensor electrodes 11 and 12 that are arranged two-dimensionally in an input region 10, as shown in FIG. 1.

The sensor electrodes 11 and 12 may be connected to sensing channels of a sensor circuit to detect a change in electrical characteristics caused by a touch of a user. A touch sensing apparatus may calculate X direction components and Y direction components of a touch position on the input region 10, based on a sensing signal acquired from each of the sensing channels.

When each of the sensor electrodes 11 and 12 of FIG. 1 is individually connected to each of the sensing channels of the sensor circuit, a number of required sensing channels may be excessively increased, thereby causing problems of increasing price of a chip package of a sensor circuit and complicating routing to connect each of the sensor electrodes 11 and 12 to the sensor circuit.

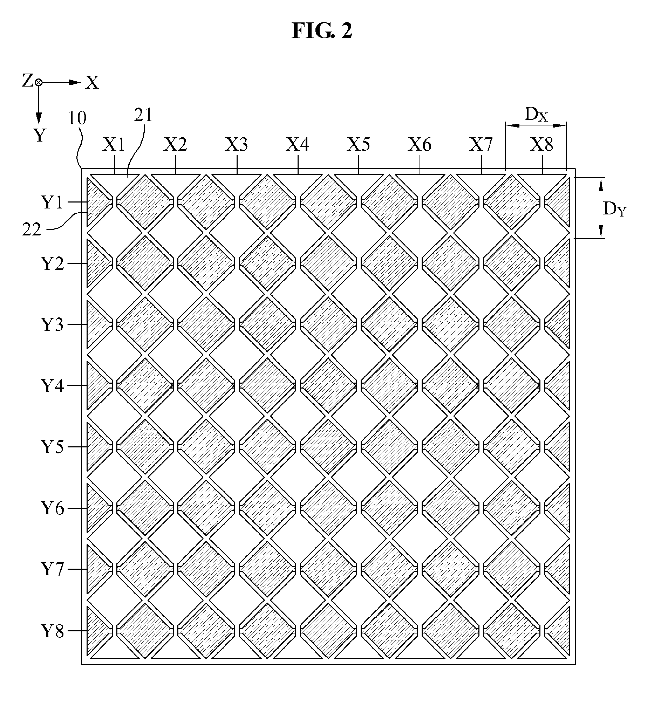

Accordingly, as shown in FIG. 2, generally, sensor electrodes arranged in the same X position among the sensor electrodes 11 represented by white in FIG. 1 may be connected in a Y direction, and may be used to calculate an X direction component of a touch point. Additionally, sensor electrodes arranged in the same Y position among the sensor electrodes 12 represented by gray in FIG. 1 may be connected in an X direction, and may be used to calculate a Y direction component of the touch point. The sensor electrodes arranged in the same X position may be, hereinafter, referred to as 'X component detection electrodes' 21, and the sensor electrodes arranged in the same Y position may be, hereinafter, referred to as 'Y component detection electrodes' 22. The X component detection electrodes 21 and the Y component detection electrodes 22 may be electrically separated from each other.

In a structure of FIG. 2, eight X component detection electrodes 21 and eight Y component detection electrodes 22 may be formed and arranged in regular intervals and may have the same width. The X component detection electrodes 21 may be sequentially connected to sensing channels X1 to X8 in the X direction, and the Y component detection electrodes 22 may be sequentially connected to sensing channels Y1 to Y8 in the Y direction.

The sensor circuit may collect sensor data indicating a change in electrical characteristics occurring in the electrodes 21 and 22, through the sensing channels X1 to X8 and Y1 to Y8. When sensor data collected by a channel Xn is denoted by $I_{Xn}$, and when sensor data collected by a channel Yn is denoted by $I_{Yn}$, a position (x, y) of a touch point may be calculated by the following scheme.

In Equation 1, $N_X$, and $N_Y$ respectively denote a number of the X component detection electrodes 21 and a number of the Y component detection electrodes 22, $D_X$ denotes an interval between two neighboring X component detection electrodes 21, and $D_Y$ denotes an interval between two neighboring Y component detection electrodes 22. When a length in the X direction and a length in the Y direction of the input region 10 are respectively represented by $L_X$, and $L_Y$, $D_X$ and $D_Y$ may be respectively defined as '$D_X = L_X / N_X$' and '$D_Y = L_Y / N_Y$.'

[Equation 1]

$$x = \left( \frac{\sum_{n=1}^{N_X} n \cdot I_{Xn}}{\sum_{n=1}^{N_X} I_{Xn}} - 0.5 \right) \cdot D_X, \quad y = \left( \frac{\sum_{n=1}^{N_Y} n \cdot I_{Yn}}{\sum_{n=1}^{N_Y} I_{Yn}} - 0.5 \right) \cdot D_Y$$

As reflected in Equation 1, each of the X component detection electrodes 21 and each of the Y component detection electrodes 22 may be respectively representative of an X coordinate and a Y coordinate that correspond to centers of width directions of the X component detection electrodes 21 and the Y component detection electrodes 22.

A range of (x, y) to be obtained by Equation 1 may be limited to '{(x, y) ¦ DX/2 < x < LX-DX/2, DY/2 < y < LY-DY/2}'. Accordingly, a position of a touch point may be uniquely detected from a region corresponding to the range among the entire input region 10. The region may be referred to as a valid input region.

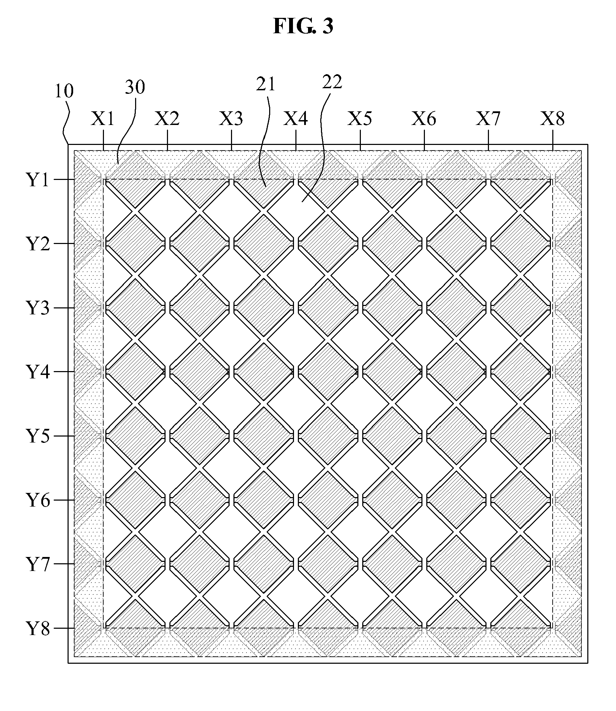

A region 30 obtained by excluding the valid input region from the input region 10 is represented by a shaded and dotted outline of FIG. 3. For example, in the region 30 corresponding to '{(x, y) ¦ (x < DX/2, x> LX-DX/2) (y < DY/2, y > LY-DY/2)}', calculated (x, y) coordinates may not have a value in the region 30, even when a center of a touched finger is placed in the region 30. Accordingly, it is impossible to substantially detect a unique position of a touch point from the region 30. The region 30 may be referred to as an invalid input region.

US 2007/0222766 A1 discloses a touch sensor device that uses an edge electrode set to provide an improved effective area.

WO2009/108765 A2 discloses a touch screen sensor which includes a visible light transparent substrate and an electrically conductive micropattern disposed on or in the visible light transparent substrate.

US 2006/023357 A1 discloses a device and a method for detecting position of unit mounted in image forming apparatus

Detailed description of the Invention

Technical Goals

In the conventional sensor electrodes 21 and 22, it is impossible to substantially detect a unique position of a touch point from the edge portion of the input region 10, the valid input region may be reduced. In particular, in the case of a touch screen, since a touch point in the input region 10 corresponds one-to-one to a position on a display screen, it is impossible to apply a touch input to an input component, such as a button placed on an edge of the display screen.

To solve the problem, when a printing scheme and the like causes the invalid input region 30 to be screened from a view of a user so that an input is not performed, a bezel unit of a display of a touch screen may be increased in width, and a touch applied to the bezel unit may be misrecognized as a normal input. Additionally, when an extension mapping is performed to cause coordinates on the valid input region to artificiality correspond to the entire input region 10, coordinates of the touch point may be distorted near an edge portion between the valid input region and the invalid input region 30.

Accordingly, there is a desire for a new sensor electrode pattern structure to remove the invalid input region 30, and to extend the valid input region to the entire input region 10.

Technical solutions

According to an aspect of the present invention, a touch sensing apparatus according to claim 1 and a method for manufacturing said touch sensing apparatus according to claim 16 are respectively provided.

According to an example there is provided a touch sensing apparatus including: a panel unit including a plurality of sensor electrodes arranged in a line along a first axis; a sensor unit to collect sensor data indicating a change in electrical characteristics occurring in each of the plurality of sensor electrodes, the sensor unit being connected to the plurality of sensor electrodes; and a computing unit to determine a touch position on the panel unit, to which a touch of a user is applied, based on sensor data collected from at least one sensor electrode among the plurality of sensor electrodes. Here, among the plurality of sensor electrodes, an edge sensor electrode may be located on an edge in a first axis direction, and may be formed narrower in width in the first axis direction than the sensor electrodes other than the edge sensor electrode.

According to another example there is provided a touch sensing apparatus including: a panel unit including a plurality of sensor electrodes arranged in a line along a first axis; a sensor unit to collect sensor data indicating a change in electrical characteristics occurring in each of the plurality of sensor electrodes, the sensor unit being connected to the plurality of sensor electrodes; and a computing unit to determine a first axis direction component of a touch position on the panel unit, based on sensor data collected from at least one of the plurality of sensor electrodes and a representative position on the first axis corresponding to each of the plurality of sensor electrodes, wherein the computing unit determines a representative position of an edge sensor electrode located on an edge in a first axis direction, among the plurality of sensor electrodes, to correspond to an edge side of the panel unit, rather than corresponding to a central position in the first axis direction, and determines the first axis direction component of the touch position.

According to still another example there is provided a method of manufacturing a touch sensing panel, the method including: forming a plurality of sensor electrodes in a line along a first axis on a plane, using conductive materials on a surface of a first non-conductive substrate, the plane forming the first non-conductive substrate. Here, the forming may include forming an edge sensor electrode that is located in an edge in a first axis direction and is narrower in width in the first axis direction than the sensor electrodes other than the edge sensor electrode among the plurality of sensor electrodes.

Effects

According to the present invention, it is possible to extend a valid input region by removing or reducing an invalid input region. Thus, it is possible to overcome or mitigate a problem that it is difficult for a touch sensing apparatus to recognize a position of a touch point in an edge portion of an input region.

Additionally, according to the present invention, all or most of an input region may be used as a valid input region without being separately processed in a software manner and thus, it is possible to provide simple and basic solutions to problems in edge position recognition characteristics.

In particular, when the present invention is applied to a touch screen, an input component arranged on an edge of a display screen may be manipulated and thus, it is possible to form a free User Interface (UI).

In a touch sensing apparatus according to an embodiment of the present invention, split electrodes of a sensor electrode in an edge side may be designed with a width narrower than that of other sensor electrodes. Thus, it is possible to further improve linearity of recognition of coordinates in a length direction of the sensor electrode in the edge portion.

Brief Description of Drawings

FIG. 1 illustrates a sensor electrode arrangement structure of a conventional touch sensing apparatus.

FIG. 2 illustrates an arrangement and connection structure of sensor electrodes of a conventional touch sensing apparatus.

FIG. 3 illustrates an invalid input region of a conventional touch sensing apparatus.

FIG. 4 is a block diagram illustrating a configuration of a touch sensing apparatus according to an embodiment of the present invention.

FIG. 5 illustrates an arrangement and connection structure of sensor electrodes of a touch sensing apparatus according to a first embodiment of the present invention.

FIG. 6 illustrates a cross-sectional structure of a panel unit in the touch sensing apparatus according to the first embodiment of the present invention.

FIG. 7 illustrates a concept of determining a representative position of an edge sensor electrode of the touch sensing apparatus according to the first embodiment of the present invention.

FIG. 8 illustrates an arrangement and connection structure of sensor electrodes of a touch sensing apparatus according to a second embodiment of the present invention.

FIG. 9 illustrates a cross-sectional structure of a panel unit in the touch sensing apparatus according to the second embodiment of the present invention.

FIG. 10 illustrates an arrangement and connection structure of sensor electrodes of a touch sensing apparatus according to a third embodiment of the present invention.

FIG. 11 illustrates a flowchart of a method of manufacturing a touch sensing panel.

Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

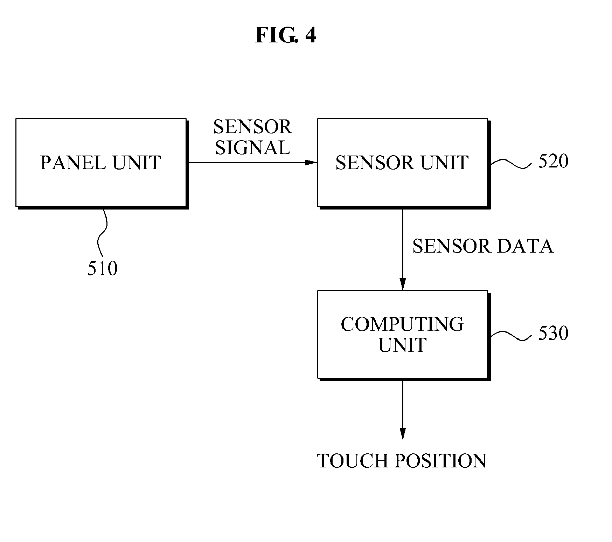

FIG. 4 briefly illustrates an overall configuration of a touch sensing apparatus according to embodiments of the present invention.

The touch sensing apparatus of FIG. 4 may function to recognize a touch position, and may include a panel unit 510, a sensor unit 520, and a computing unit 530 as shown in FIG. 4.

The panel unit 510 may include a plurality of sensor electrodes arranged in a line in an axis direction. The sensor electrodes may be formed on a surface of a substrate forming the panel unit 510 using conductive materials. In the case of a touch screen, sensor electrodes may be formed in specific forms by patterning, using an etching scheme, a transparent film having a surface on which transparent conductive materials such as Indium Tin Oxide (ITO) are formed. A sensor electrode arrangement structure and lamination structure of the panel unit 510 will be further described below.

Each of the sensor electrodes of the panel unit 510 may be connected to each of sensing channels of the sensor unit 520. The sensor unit 520 may receive a sensor signal from each of the sensor electrodes through each of the sensing channels.

The sensor unit 520 may extract, based on information on a magnitude and a phase of the sensor signal, sensor data indicating a change in electrical characteristics occurring when a touch of a user is input. Additionally, the sensor unit 520 may include, for example, a sensor circuit to measure a capacitance change occurring when the touch of the user is input. Here, the sensor unit 520 may extract, as sensor data, a value that is substantially in proportion to an area of a touch region formed on each of the sensor electrodes.

The extracted sensor data may be input to the computing unit 530, and may be used to extract coordinates of a touch point. The computing unit 530 may perform an operation of determining a touch position and whether a touch is input, based on the sensor data acquired from each of the sensor electrodes. The operation performed by the computing unit 530 will be described in detail with reference to the following embodiments.

(First embodiment)

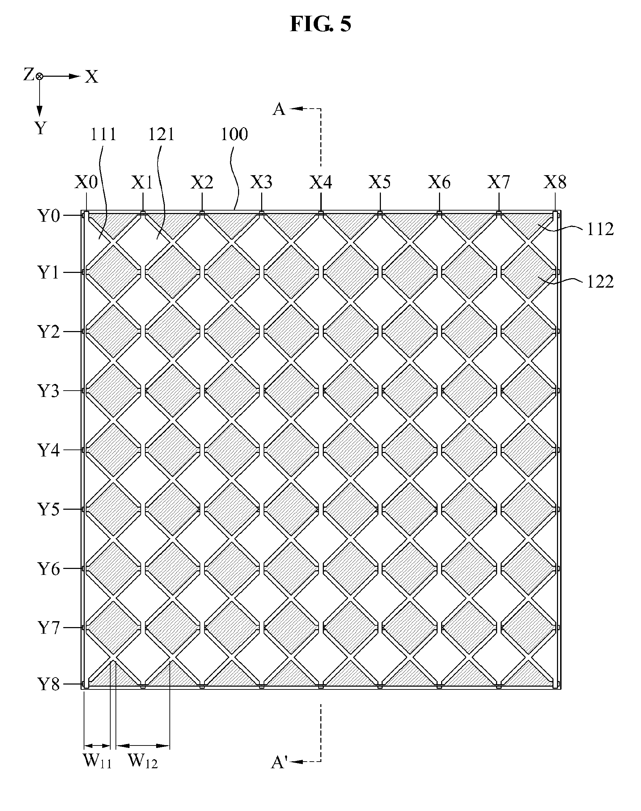

FIG. 5 illustrates the sensor electrode arrangement structure of the panel unit 510 of the touch sensing apparatus according to a first embodiment of the present invention.

The panel unit 510 according to the first embodiment may have an electrode arrangement structure where nine sensor electrodes X0 to X8 arranged adjacent to each other in an X direction (hereinafter, referred to as 'X component detection electrodes'; 111 and 121) intersect nine sensor electrodes Y0 to Y8 arranged adjacent to each other in a Y direction (hereinafter, referred to as 'Y component detection electrodes'; 112 and 122).

Here, the X component detection electrodes 111 and 121 may form a pattern where a plurality of unit electrodes having a same lozenge or triangle shape are connected to each other in the Y direction. The Y component detection electrodes 112 and 122 may also form a pattern where a plurality of unit electrodes having a same lozenge or triangle shape are connected to each other in the Y direction.

Additionally, the X component detection electrodes 111 and 121, and the Y component detection electrodes 112 and 122 may intersect one another, so that space of the X component detection electrodes 111 and 121 may be fitted to space of the Y component detection electrodes 112 and 122. The X component detection electrodes 111 and 121 and the Y component detection electrodes 112 and 122 may be electrically separated from each other.

Electrode regions of the X component detection electrodes 111 and 121 and Y component detection electrodes 112 and 122 may be formed on a substrate in the form of lozenges and triangles using conductive materials. In the case of a touch screen, transparent conductive materials may be used on a separate transparent film to form the X component detection electrodes 111 and 121 and Y component detection electrodes 112 and 122, in the form as shown in FIG. 5.

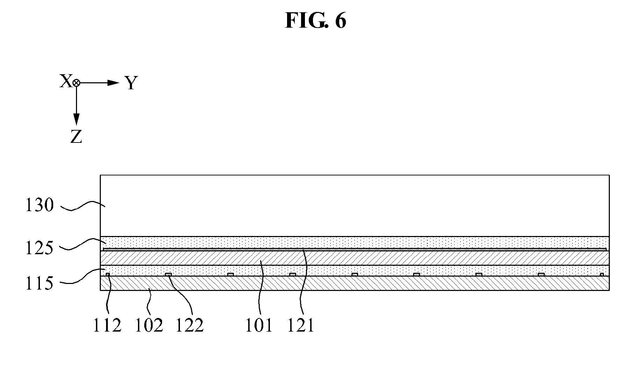

Such a lamination structure may also be applied to another touch sensing apparatus, such as a touch pad. FIG. 6 illustrates a cross-sectional diagram taken along a line A-A' of FIG. 5, to show the lamination structure.

Referring to FIG. 6, the Y component detection electrodes 112 and 122 may be arranged in regular intervals in the Y direction, and may be formed on a surface of a transparent film 102, namely, a base layer. Additionally, the X component detection electrodes 111 and 121 may also be formed on a transparent film 101, namely, a base layer, however, the X component detection electrode 121 of FIG. 6 may be laminated above the Y component detection electrodes 112 and 122.

Of course, the Y component detection electrodes 112 and 122 may be laminated above the X component detection electrodes 111 and 121, and the X component detection electrodes 111 and 121 and the Y component detection electrodes 112 and 122 may be respectively formed below the transparent films 101 and 102.

When the transparent films 101 and 102, on which the X component detection electrodes 111 and 121 and the Y component detection electrodes 112 and 122 are formed, are respectively referred to as an X electrode layer, and a Y electrode layer, the X electrode layer and the Y electrode layer may be attached to each other by an adhesive layer 115, and may be attached onto a rear surface of a case 130 of an electronic device using an adhesive layer 125.

For example, when the electronic device has a touch screen, the case 130 may be formed of transparent materials, such as a tempered glass or acrylic, and the adhesive layers 115 and 125 may include, for example, a transparent adhesive, such as a double-sided Optically Clear Adhesive (OCA) or optical glue.

The arrangement and connection structure of FIG. 5 may differ from that of FIG. 2, as follows.

First, in the conventional structure of FIG. 2, a plurality of triangular-shaped unit electrodes on an edge side of an input region 10 are located on both ends in a length direction of an X component detection electrode 21 and a Y component detection electrode 22, whereas in FIG. 5, a plurality of triangular-shaped unit electrodes are connected to each other in a direction parallel to the length direction of the X component detection electrode 121 and Y component detection electrode 122 that are located inside an input region 100.

In other words, in FIG. 5, triangular-shaped electrodes arranged on both edges in the X direction may be connected to each other in the Y direction, to form the X component detection electrode 111 (hereinafter, referred to as an X edge sensor electrode 111). Additionally, triangular-shaped electrodes arranged on both edges in the Y direction may be connected to each other in the X direction, to form the Y component detection electrode 112 (hereinafter, referred to as a Y edge sensor electrode 112.

Additionally, in FIG. 2, each of the X component detection electrode 21 and the Y component detection electrode 22 has a uniform width, whereas in FIG. 5, a width of an electrode region of the X edge sensor electrode 111 may be set to be less than a width of the X component detection electrode 121 located inside from both the edges in the X direction (hereinafter, referred to as an X internal sensor electrode 121).

As shown in FIG. 5, the width of the X edge sensor electrode 111 may be represented by $W_{11}$, and the width of the X internal sensor electrode 121 may be represented by $W_{12}$. Here, $W_{11}$ is less than $W_{12}$, and a relationship between the widths of the X edge sensor electrode 111 and the X internal sensor electrode 121 may equally be applied to widths of the Y edge sensor electrode 112 and a Y internal sensor electrode 122.

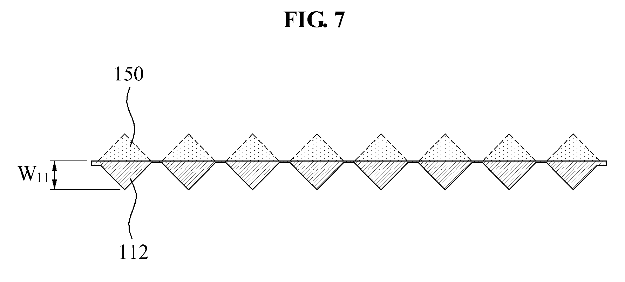

FIG. 7 illustrates a concept of an effect of improving edge recognition characteristics by the above-described structure.

FIG. 7 illustrates Y component detection electrodes 112 located on an upper edge in the Y direction. Each of the Y edge sensor electrodes 112 may have a shape divided by half of the Y internal sensor electrode 122 along the upper edge of the input region 100. As shown in FIG. 7, the Y edge sensor electrodes 112 may be arranged in the form of triangles connected to each other in the X direction.

Here, assuming that virtual electrode regions 150 exist so that the Y edge sensor electrodes 112 have an identical shape to the Y internal sensor electrodes 122, each of the Y edge sensor electrodes 112 may be representative of a Y position corresponding to a center of the Y direction, that is, a Y position corresponding to the upper edge of the input region 100.

Likewise, the Y edge sensor electrodes 112 on a lower side of the input region 100, and the X edge sensor electrodes 111 on left and right sides of the input region 100 may be respectively representative of a Y position corresponding to a lower edge of the input region 100, and an X position corresponding to left and right edges of the input region 100.

Accordingly, when the sensor electrode arrangement structure of FIG. 5 is adopted, a position (x, y) of the X direction and the Y direction of a touch point may be calculated using the following Equation 2:

[Equation 2]

$$x = \left( \frac{\sum_{n=0}^{N_X} n \cdot I_{Xn}}{\sum_{n=0}^{N_X} I_{Xn}} \right) \cdot D_X, \qquad y = \left( \frac{\sum_{n=0}^{N_Y} n \cdot I_{Yn}}{\sum_{n=0}^{N_Y} I_{Yn}} \right) \cdot D_Y$$

In Equation 2, $N_X$, and $N_Y$ respectively denote a value obtained by subtracting '1' from a number of the sensor electrodes 111 and 121 arranged in the X direction, and a value obtained by subtracting '1' from a number of the sensor electrodes 112 and 122 arranged in the Y direction. In FIG. 5, $N_X$, and $N_Y$ may have a value of '8'. Additionally, $D_X$ denotes an interval between central positions of the X internal sensor electrodes 121 arranged adjacent to each other in the X direction, and $D_Y$ denotes an interval between central positions of the Y internal sensor electrodes 122 arranged adjacent to each other in the Y direction. When a size of an input region in the X direction and a size of the input region in the Y direction are respectively represented by $L_X$, and $L_Y$, $D_X$, and $D_Y$ may be respectively defined as '$D_X = L_X / N_X$,' and '$D_Y = L_Y / N_Y$.'

Referring to Equation 2, in the first embodiment of FIG. 5, valid X values and valid Y values may be obtained from the entire input region 100.

In other words, the entire input region 100 of FIG. 5 may be effectively used, compared with the conventional electrode arrangement structure of FIG. 2 where the valid input region is formed by '$D_X/2$' in the X direction and by '$D_Y/2$' in the Y direction from the edge of the input region 100.

Additionally, it is possible to identify a unique touch position in all points over the entire input region 100 by a simple basic operation, without additional operations.

As shown in FIG. 5, widths of the X and Y edge sensor electrodes 111 and 112 are set to be half of widths of the X and Y internal sensor electrodes 121 and 122. This setting is desirable, however, not necessary.

This is because edge recognition characteristics may be improved at all times when the former widths are less than the latter widths.

For example, when a ratio of the widths of the edge sensor electrodes 111 and 112 to the widths of the internal sensor electrodes 121 and 122 is greater than '1/2' and less than '1', an invalid input region of the input region 100 may be reduced even not being completely removed.

Additionally, when the ratio of the widths of the edge sensor electrodes 111 and 112 to the widths of the internal sensor electrodes 121 and 122 is less than '1/2', and when an input region having a same size is covered by a same number of sensing channels, the widths of the internal sensor electrodes 112 and 122 may be increased and accordingly, a sensor resolution may be relatively lowered. However, it is possible to completely remove the invalid input region.

The above-described plane structure of FIG. 5 may be based on dual electrode layers of FIG. 6, however, may also be applied to a single-layer type structure.

Specifically, electrodes may be arranged on a single substrate using transparent conductive materials, such as metals or ITO, in the form as shown in FIG. 1. Additionally, the electrodes 11 represented by white in FIG. 1 may be horizontally connected to each other, and the electrodes 12 represented by gray in FIG. 1 may be vertically connected to each other.

A connection pattern of either the electrodes 11 or the electrodes 12 may be formed on the substrate using the same conductive material, and the other connection pattern may be formed by forming open regions on only an upper side of electrodes to be connected, by coating conductive materials between the open regions, and by forming a connection path. The plane structure of FIG. 5 may be configured as described above and thus, it is possible to manipulate a thin panel unit 510 with low costs.

(Second embodiment)

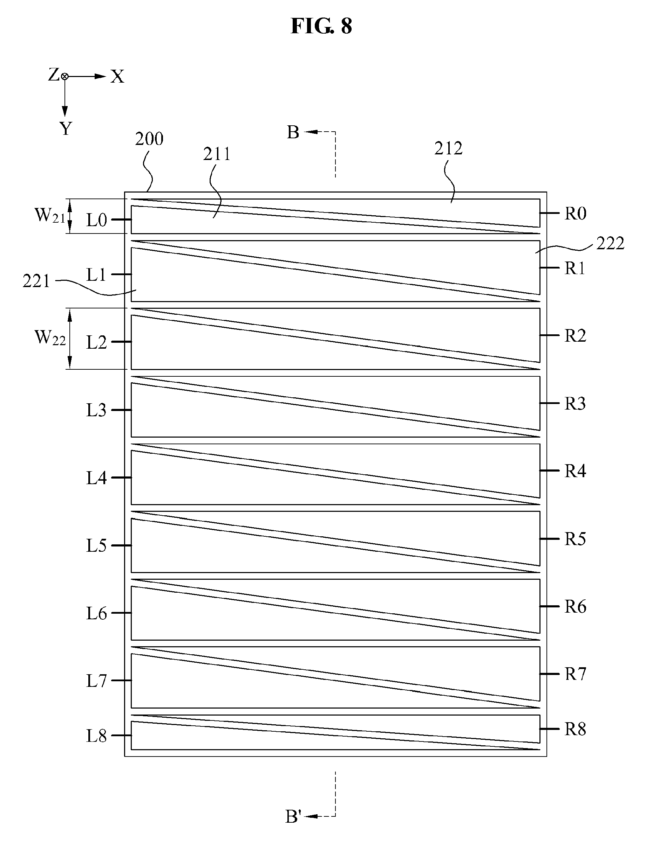

FIG. 8 illustrates a sensor electrode plane structure where a panel unit 510 is configured with a single layer in a touch sensing apparatus according to a second embodiment of the present invention.

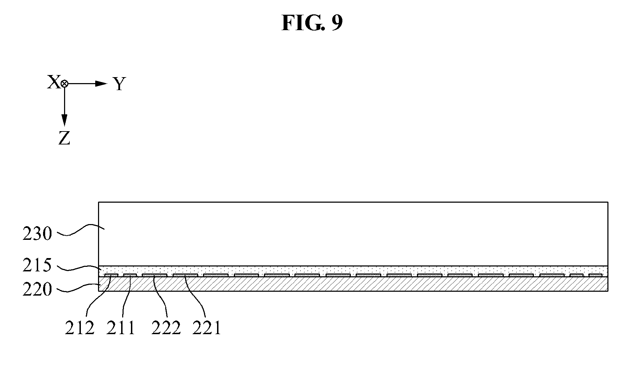

FIG. 9 illustrates a cross-sectional diagram taken along a line B-B' of FIG. 8.

As shown in FIGS. 8 and 9, a plurality of sensor electrodes 211, 212, 221, and 222 having a right triangular shape may be arranged in an input region 200, and may form each predetermined region.

Diagonals of the sensor electrodes 211 and 221 as a half of the plurality of sensor electrodes 211, 212, 221, and 222 may be placed in an upper rightward direction, and diagonals of the other half, namely the sensor electrodes 212 and 222, may be placed in a lower leftward direction.

In other words, diagonals of a pair of the sensor electrodes 211 and 212, or diagonals of a pair of the sensor electrodes 221 and 222 may be placed facing each other. The two pairs of the sensor electrodes 211, 212, 221, and 222 may be arranged to form a region having substantially a rectangular shape, so that central positions of widths in the Y direction may be substantially identical to each other.

As shown in FIG. 8, pairs of the sensor electrodes 211, 212, 221, and 222 may be arranged on a plurality of Y positions. The sensor electrodes 211 and 221 arranged on the Y positions may be respectively connected to sensing channels L0 to L8 of the sensor unit 520, and the sensor electrodes 212 and 222 arranged on the Y positions may be respectively connected to sensing channels R0 to R8 of the sensor unit 520.

A scheme of calculating X and Y direction components of a touch point using the above-described structure is described below.

When a specific position on the input region 200 is touched by a human body and the like, a touch region having a fixed area may be formed in the specific position. A relative ratio of a touch region formed on the sensor electrodes 211 and 221 to a touch region formed on the sensor electrodes 212 and 222 may be changed based on a position in the X direction in which the touch region is formed.

For example, when a touch point leans to the left on the drawings, the touch region formed on the sensor electrodes 211 and 221 may become relatively larger than the touch region formed on the sensor electrodes 212 and 222.

In other words, an X-direction position x of the touch point may be calculated by the following Equation 3:

[Equation 3]

$$x = \frac{\displaystyle\sum_{n=0}^{N} I_{Rn}}{\displaystyle\sum_{n=0}^{N} I_{Ln} + \sum_{n=0}^{N} I_{Rn}} \cdot L_X$$

In Equation 3, $L_X$ denotes a length in the X direction of the input region 200, $I_{Ln}$ denotes sensor data acquired from a sensing channel Ln, and $I_{Rn}$ denotes sensor data acquired from a sensing channel Rn.

Additionally, (N+1) denotes a number of Y-direction positions where the sensor electrodes 211, 221, 212, and 222 are arranged, and the number of Y-direction positions in FIG 8 may be '9'. In other words, X direction components of the touch position may be calculated using a relative ratio of a sum of sensor data acquired for the nine sensor electrodes 211 and 221 and a sum of sensor data acquired for the nine sensor electrodes 212 and 222.

The Y direction components of the touch position may be calculated using, as a region formed by a single virtual sensor electrode having the same rectangular shape, the rectangular shaped region formed by the two sensor electrodes 211 and 212 or the two sensor electrodes 221 and 222 arranged on the same Y position.

In other words, when the sensor data acquired for the two sensor electrodes 211 and 212 arranged on the same Y position is respectively represented by $I_{Rn}$ and $I_{Ln}$, a Y-direction position y of the touch point may be calculated as follows. Here, $D_Y$ denotes an interval between central positions in the Y direction of the internal sensor electrodes 221 and 222 other than the sensor electrodes 211 and 212 placed on the edge in the Y direction. When a length in the Y direction of the input region 200 is represented by $L_Y$, $D_Y$ may be defined as '$D_Y = L_Y / N$.' In the second embodiment of FIG. 8, $D_Y$ is equal to $W_{22}$.

$$[\text{Equation 4}]$$

$$y = \left( \frac{\sum\limits_{n=0}^{N} n \cdot (I_{Ln} + I_{Rn})}{\sum\limits_{n=0}^{N} (I_{Ln} + I_{Rn})} \right) \cdot D_Y$$

X and Y coordinates of the touch point may be computed by the computing unit 530. Referring to FIG. 8, the edge sensor electrodes 211 and 212 arranged on upper and lower edge portions of the input region 200, that is, on the edge in the Y direction may have widths half of widths of the internal sensor electrodes 221 and 222.

Additionally, as shown in Equation 4, the edge sensor electrodes 211 and 212 may be representative of the Y-direction position of the upper and lower edge portions of the input region 200, rather than being representative of the Y position of a center of the width direction.

Accordingly, it is possible to prevent an invalid input region from being formed on the upper and lower edge portions of the input region 200.

As shown in FIG. 9, the panel unit 510 having the above plane structure may include an electrode layer where the sensor electrodes 211, 212, 221, and 222 are formed on a surface of a base layer including a single substrate 220.

The electrode layer may be attached onto a rear surface of a case of an electronic device by an adhesive layer 215. For example, when the electronic device includes a touch screen, the substrate 220 may be formed of transparent insulating materials such as polyethylene terephthalate (PET), and the sensor electrodes 211, 212, 221, and 222 may be formed of transparent conductive materials such as ITO.

Additionally, the adhesive layer 215 may include, for example, a transparent adhesive such as an OCA or optical glue.

The case 230 may also be formed of transparent materials, such as transparent acrylic or glass.

In the case of a touch screen, a wiring pattern used to connect the sensor electrodes 211, 212, 221, and 222 to the sensor unit 520 may be provided by silk screen printing conductive materials such as silver on the transparent substrate 220. Here, the wiring pattern formed of silver may be placed outside the input region 200, that is, may be placed on a display bezel region where opaque printing is performed.

(Third embodiment)

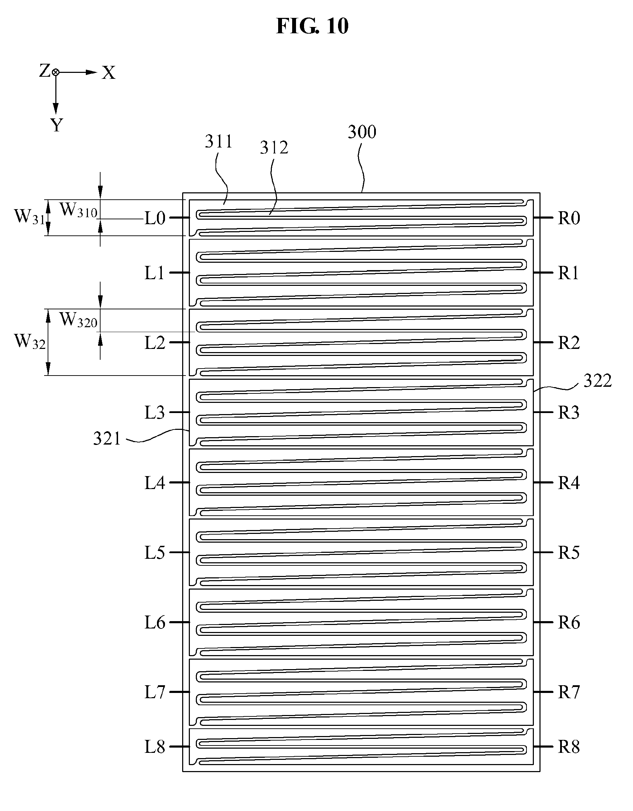

FIG. 10 illustrates a structure obtained by improving and modifying the plane structure of FIG. 8.

A panel unit 510 of FIG. 10 may also have a same cross-sectional structure as shown in FIG. 9. In an input region 300 of the panel unit 510 of FIG. 10, sensor electrodes 311, 312, 321, and 322 may respectively correspond to the sensor electrodes 211, 212, 221, and 222 of FIG. 8. Accordingly, the description regarding FIG. 8 may equally be applied to the third embodiment of the present invention, and overlapping descriptions may be omitted herein.

In upper and lower edge portions of the input region 300 of FIG. 10, that is, in an edge in the Y direction, the sensor electrodes 311 and 312 may be formed with a width $W_{31}$ in the Y direction, and the plurality of sensor electrodes 321 and 322 may be arranged in regular intervals and may have a with $W_{32}$ in the Y direction. Here, the plurality of sensor electrodes 321 and 322 may be arranged further inside in the Y direction than the sensor electrodes 311 and 312.

As shown in FIG. 10, the sensor electrodes 311 and 321 arranged on nine positions in the Y direction may be respectively connected to sensing channels L0 to L8, and the sensor electrodes 312 and 322 arranged on the nine positions in the Y direction may be respectively connected to sensing channels R0 to R8.

Here, $W_{31}$ is less than $W_{32}$, and may desirably be equal to a value of '$0.5 \cdot W_{32}$.' A plurality of triangular-shaped split regions of the sensor electrodes 311 and 321 may be engaged with a plurality of triangular-shaped split regions of the sensor electrodes 312 and 322 in the Y direction on left and right sides of the input region 300. In other words, the plurality of triangular-shaped split regions may have a saw-toothed shape.

Referring to FIG. 10, the sensor electrodes 311 and 321 connected to the sensing channels L0 to L8 may be engaged with the sensor electrodes 312 and 322 connected to the sensing channels R0 to R8. When the sensor electrodes 311, 312, 321, and 322 are arranged as described above, linearity of recognition of a position in the X direction of the touch point may be improved by preventing the position in the X direction from being influenced by a position in the Y direction of the touch point.

A number of the split regions of the edge sensor electrodes 311 and 312 may not be necessarily identical to a number of the split regions of the internal sensor electrodes 321 and 322. In FIG. 10, each of the edge sensor electrodes 311 and 312 has two split regions, and each of the internal sensor electrodes 321 and 322 has three split regions.

When widths of the split regions of the edge sensor electrodes 311 and 312 are represented by $D_3$, and widths of the split regions of the internal sensor electrodes 321 and 322 are represented by $D_4$, $D_3$ may have a value identical to $D_4$, however, the shape of the sensor electrodes 311, 312, 321, and 322 may desirably be determined so that $D_3$ may be less than $D_4$.

This is because, when $D_3$ may be less than $D_4$, linearity of the position of the X direction of the touch point may be further improved in the upper and lower edge portions of the input region 300. In other words, since the split regions of the edge sensor electrodes 311 and 312 may not be repeatedly arranged in the edge side of the input region 300, the position of the X direction of the touch point may be recognized to be distorted to one side.

For example, when the upper edge portion of the input region 300 is touched, sensor data acquired for the sensing channel L0 may have a relatively high value compared with sensor data acquired for the sensing channel R0.

Additionally, when the lower edge portion the input region 300 is touched, the sensor data acquired for the sensing channel R0 may have a relatively high value compared with the sensor data acquired for the sensing channel L0.

Accordingly, the split regions of the edge sensor electrodes 311 and 312 may be designed to occupy a smaller area than an area occupied by the split regions of the internal sensor electrodes 321 and 322 and thus, it is possible to minimize a section where the position of the X direction of the touch point is distorted.

When Equation 4 is further generalized and when $W_{21}$ is less than $W_{22}$ in FIG. 8, or when $W_{31}$ is less than $W_{32}$ in FIG. 10, a Y-direction position y of a touch point may be obtained by the following Equation 5. In FIG. 10, $D_Y$ is equal to $W_{32}$.

[Equation 5]

$$ y = \left( \frac{W_{21} - 0.5 W_{22}}{W_{22}} + \frac{\sum_{n=0}^{N} n \cdot (I_{Ln} + I_{Rn})}{\sum_{n=0}^{N} (I_{Ln} + I_{Rn})} \right) \cdot D_Y $$

As shown in Equation 5, when the edge sensor electrodes 211, 212, 311, and 312 are designed to have an identical width to a width of the internal sensor electrodes 221, 222, 321, and 322, Y components corresponding to '$0.5 \cdot D_Y$' in the upper and lower edge portions of each of the input regions 200 and 300 may be defined as an invalid input region.

However, the edge sensor electrodes 211, 212, 311, and 312 may be designed to have a width half of the width of the internal sensor electrodes 221, 222, 321, and 322 and thus, it is possible to use the entire input regions 200 and 300 as valid input regions.

The following panel unit 510 and computing unit 530 may be configured by modifying the above-described embodiments.

Specifically, the panel unit 510 may be designed so that the internal sensor electrodes 121, 122, 221, 222, 321, and 322 and the edge sensor electrodes 111, 112, 211, 212, 311, and 312 may have an identical width. When a Y-direction position of a touch point is calculated, the computing unit 530 may determine the representative positions of the edge sensor electrodes 111, 112, 211, 212, 311, and 312 to face the upper and lower edge portions of the input regions 100, 200, and 300, not to correspond to a central position in the width direction thereof. Thus, it is possible to extend the valid input region.

When the representative positions of the edge sensor electrodes 111, 112, 211, 212, 311, and 312 are computed to correspond to the edge portions of the input regions 100, 200, and 300, the following Equation 6 may be applied. $N_Y$, and $D_Y$ are defined as described above, and $I_{Yn}$ may be defined as a value of '$I_{Rn}+I_{Ln}$' in the embodiments of FIGS. 8 and 10.

[Equation 6]

$$y = \left( \frac{0 \cdot I_{Y1} + N_Y \cdot I_{YN_Y} + \sum_{n=2}^{N_Y-1}(n-0.5) \cdot I_{Yn}}{\sum_{n=1}^{N_Y} I_{Yn}} \right) \cdot D_Y$$

The third embodiment may be usefully applied, in particular, when it is difficult to adjust the shape and size of the sensor electrode pattern of the panel unit 510. In other words, it is possible to achieve an effect of extending the valid input region by extending coordinates corresponding to only the edge portions of the input regions 100, 200, and 300 in a direction of the edge portions.

Additionally, the third embodiment may be applied typically when the width of the edge sensor electrodes 111, 112, 211, 212, 311, and 312 are greater than 1/2 of the width of the internal sensor electrodes 121, 122, 221, 222, 321, and 322.

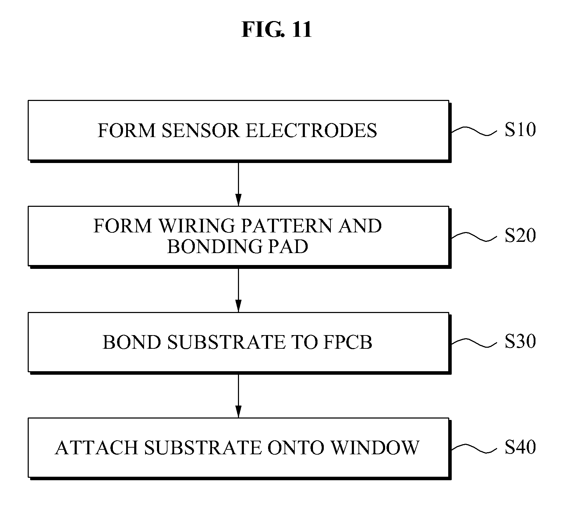

Hereinafter, a method of manufacturing a touch sensing panel according to an embodiment of the present invention will be described with reference to FIG. 11. FIG. 11 illustrates a flowchart of the method of manufacturing the touch sensing panel.

In FIG. 11, in operation S10, sensor electrodes having a plane structure as shown in FIGS. 5 or 8, or 10 may be formed on a surface of a non-conductive substrate.

As described above, the formed sensor electrodes may be arranged on a plurality of positions along an axis on the substrate, and a region formed by sensor electrodes located on an edge in an axis direction may have a narrow width in the arrow direction, compared with sensor electrodes other than the sensor electrodes located on the edge.

In the plane structures of FIGS. 8 and 10, the sensor electrodes may be formed on a surface of a single substrate. However, in the plane structure of FIG. 5, sensor electrodes may be formed on a plurality of positions along a Y axis on a surface of a first substrate, sensor electrodes may be formed on a plurality of positions along an X axis on a surface of a second substrate, and the first substrate and the second substrate may be attached to each other using an adhesive.

A sensor electrode may be formed using an etching scheme and a laminating scheme. In the etching scheme, one or both surfaces of a non-conductive substrate may be coated with conductive materials such as metals or ITO, and regions other than a sensor electrode region may be etched using a mask pattern having the same shape as a sensor electrode desired to be formed, so that the sensor electrode may be formed. Here, both of a wet etching scheme and a dry etching scheme may be used, and a scheme of screen-printing a photosensitizer may also be applied.

In the laminating scheme, conductive materials such as metals or ITO may be sputtered or screen-printed on a surface of a non-conductive substrate, using a mask pattern having the same shape as a sensor electrode, so that the sensor electrode may be formed. Here, examples of the non-conductive substrate may include film materials having flexibility such as PET, or may include materials for a Printed Circuit Board (PCB) such as a Copper Clad Laminate (CCL), or substrate materials for a Flexible PCB (FPCB).

When the substrate on which the sensor electrodes are formed is prepared, a wiring pattern and a bonding pad may be formed in operation S20.

The boding pad may be provided to connect the substrate to a separate substrate in which a sensor chip is mounted. When a PCB process or an FPCB process is used, sensor electrodes and a sensor chip may be formed on a single substrate. Here, an operation for manufacturing a bonding pad may be omitted.

Additionally, since the wiring pattern may be formed of the same conductive materials as the sensor electrodes, operations S10 and S20 may be simultaneously performed. Conversely, when sensor electrodes are formed using ITO on a transparent substrate, and then when an FPCB in which a sensor chip is mounted is bonded onto the transparent substrate, a pad for Anisotropic Conductive Film (ACF) bonding or Anisotropic Conductive Paste (ACP) bonding may be formed. Here, the bonding pad may be formed of materials having high adhesiveness, such as silver.

Also, the wiring pattern used to connect the bonding pad to each of the sensor electrodes may be desirably formed of materials such as silver, but there is no limitation thereto. Accordingly, the wiring pattern may be formed of materials such as ITO used to form the sensor electrodes.

When the bonding pad is formed, the substrate having the sensor electrodes may be bonded to an FPCB in which a sensor chip is mounted in operation S30.

When the FPCB is bonded to the substrate, the substrate may be attached onto a transparent window in operation S40. In operation S40, a double-sided adhesive tape, an OCA, or optical glue may be used as an adhesive material to attach the substrate onto the window.

Operation S40 may be additionally performed when the touch sensing apparatus is a touch screen. Here, the window may be superimposed onto a display of an electronic device, and may be formed of materials, such as transparent acrylic, or a glass. The window may function as a touch surface touched by a user.

The touch sensing apparatus having a single layer type structure or a double layer type structure where sensor electrodes are arranged has been described above with reference to various drawings. The descriptions regarding recognition of the Y-direction position of the touch point in one embodiment may equally be applied to other embodiments.

Additionally, the size and the shape of sensor electrodes based on the X axis and the Y axis have been described above. The X axis direction and the Y axis direction may be variously represented as a horizontal direction and a vertical direction, or as a length direction and a width direction. In the present invention, the X axis and the Y axis may be orthogonal to each other, but there is no limitation thereto. Accordingly, the X axis and the Y axis may be widely interpreted as two axes that intersect each other in an optional direction.

In view of touch position recognition characteristics, sensor electrodes having the same shape or a corresponding shape may desirably be repeatedly arranged along an X axis or a Y axis, but there is no limitation thereto. Accordingly, it is possible to form a panel unit 510 using a plurality of sensor electrodes having different shapes, as occasion demands.

For example, a first sensor electrode having a triangular shape elongated in an X direction and a second sensor electrode having a rectangular shape elongated in the X direction may be arranged alternatively, and the first sensor electrode and the second electrode may be used to calculate X direction components and Y direction components of each touch position.

Although a few embodiments of the present invention have been shown and described, the present invention is not limited to the described embodiments.

## Claims

1. A touch sensing apparatus having a touch position determination function, the touch sensing apparatus comprising:

   a panel unit (510) comprising a plurality of sensor electrodes arranged in a line along a first axis;
   a sensor unit (520) to collect sensor data indicating a change in capacitance occurring in each of the plurality of sensor electrodes, the sensor unit being connected to the plurality of sensor electrodes; and
   a computing unit (530) to determine a touch position on the panel unit, to which a touch of a user is applied, based on sensor data collected from at least one sensor electrode among the plurality of sensor electrodes, **characterized in that**, among the plurality of sensor electrodes, an edge sensor electrode (211, 212, 311, 312) is located on an edge in a first axis direction, and is formed narrower in width in the first axis direction than the other sensor electrodes (221, 222, 321, 322),
   wherein the computing unit (530) is arranged to compute a weighted average of a representative position of each of the plurality of sensing electrodes, using, as a weight, a sensing signal acquired from at least one of the plurality of sensor electrodes, and determine the touch position,
   wherein a representative position of the edge sensor electrode (211, 212, 311, 312) corresponds to the edge in the first axis direction,

2. The touch sensing apparatus of claim 1, wherein the edge sensor electrode (211, 212, 311, 312) has a width in the first axis direction half of a width in the first axis direction of the other sensor electrodes (221, 222, 321, 322).

3. The touch sensing apparatus of claim 1, wherein the panel unit (510) comprises:

   a first panel comprising a plurality of first sensor electrodes arranged in a line along the first axis; and
   a second panel comprising a plurality of second sensor electrodes arranged in a line along a second axis intersecting the first axis.

4. The touch sensing apparatus of claim 1, wherein the edge sensor electrode (211, 212, 311, 312) comprises a plurality of triangular-shaped unit electrodes that are connected in a second axis direction intersecting the first axis direction.

5. The touch sensing apparatus of claim 1, wherein the panel unit (510) is configured with a single layer panel having a surface on which the plurality of sensor electrodes are formed.

6. The touch sensing apparatus of claim 1, wherein the plurality of sensor electrodes are formed with different widths in the first axis direction along the second axis intersecting the first axis.

7. The touch sensing apparatus of claim 1, wherein a plurality of split electrodes comprised in the edge sensor electrode occupy a smaller area than an area occupied by split electrodes of the other sensor electrodes.

8. The touch sensing apparatus of claim 1, wherein representative positions of the other sensor electrodes correspond to a central position in a first axis direction of each of the other sensor electrodes.

9. The touch sensing apparatus of claim 1 having a touch position determination function, the touch sensing apparatus comprising:

   a computing unit (530) arranged to determine a first axis direction component of a touch position on the panel unit, based on sensor data collected from at least one of the plurality of sensor electrodes and a representative position on the first axis corresponding to each of the plurality of sensor electrodes,
   wherein the computing unit (530) is arranged to determine a representative position of an edge sensor electrode located on an edge in a first axis direction, among the plurality of sensor electrodes, to correspond to an edge side of the panel unit, and to determine the first axis direction component of the touch position.

10. The touch sensing apparatus of claim 9, wherein the computing unit (530) is arranged to determine representative positions of sensor electrodes (221, 222, 321, 322) other than the edge sensor electrode (211, 212, 311, 312) to correspond to a central position in a first axis direction of each of the other sensor electrodes, and to determine the first axis direction component of the touch position.

11. The touch sensing apparatus of claim 9, wherein the plurality of sensor electrodes are formed with different widths in the first axis direction along a second axis intersecting the first axis.

12. The touch sensing apparatus of claim 9, wherein the panel unit (510) comprises:

   a first panel comprising a plurality of first sensor electrodes arranged in a line along the first axis; and
   a second panel comprising a plurality of second sensor electrodes arranged in a line along the second axis intersecting the first axis.

13. The touch sensing apparatus of claim 9, wherein the edge sensor electrode (211, 212, 311, 312) comprises a plurality of triangular-shaped unit electrodes that are connected in a second axis direction intersecting the first axis direction.

14. The touch sensing apparatus of claim 9, wherein the panel unit (510) is configured with a single layer panel having a surface on which the plurality of sensor electrodes are formed.

15. The touch sensing apparatus of claim 9, wherein a plurality of split electrodes comprised in the edge sensor electrode occupy a smaller area than an area occupied by split electrodes of the other sensor electrodes.

16. A method of manufacturing a touch sensing panel for a touch sensing apparatus according to one of claims 1 to 15, the method comprising:

   forming a plurality of sensor electrodes in a line along a first axis on a plane, using conductive materials on a surface of a first non-conductive substrate, the plane forming the first non-conductive substrate,
   wherein the forming comprises forming an edge sensor electrode (211, 212, 311, 312) that is located in an edge in a first axis direction and is narrower in width in the first axis direction than the sensor electrodes (221, 222, 321, 322) other than the edge sensor electrode (211, 212, 311, 312) among the plurality of sensor electrodes.

**17.** The method of claim 16, further comprising:

attaching the first non-conductive substrate on which the plurality of sensor electrodes are formed, to a surface of a second non-conductive substrate.

**18.** The method of claim 16, wherein the forming comprises:

forming a first electrode set on a surface of a first substrate, the first electrode set comprising a plurality of first sensor electrodes arranged in a line along the first axis;

forming a second electrode set on a surface of a second substrate, the second electrode set comprising a plurality of second sensor electrodes arranged in a line along a second axis; and

laminating the first substrate and the second substrate.

**Patentansprüche**

**1.** Berührungsempfindliches Gerät mit einer Tastpositionsbestimmungsfunktion, wobei das berührungsempfindliche Gerät umfasst:

eine Bedienfeldeinheit (510) mit einer Vielzahl von Sensorelektroden, die in einer Linie entlang einer ersten Achse angeordnet sind;

eine Sensoreinheit (520) zum Sammeln von Sensordaten, die eine Änderung der Kapazität, die in jeder der Vielzahl von Sensorelektroden auftritt, anzeigen, wobei die Sensoreinheit mit der Vielzahl von Sensorelektroden verbunden ist; und

eine Recheneinheit (530) zum Bestimmen einer Berührungsposition auf der Bedienfeldeinheit, auf die eine Berührung eines Benutzers aufgebracht wird, basierend auf Sensordaten, die von mindestens einer Sensorelektrode aus der Vielzahl von Sensorelektroden heraus gesammelt werden,

**dadurch gekennzeichnet, dass** aus der Vielzahl von Sensorelektroden eine Kantensensorelektrode (211, 212, 311, 312) an einer Kante in einer ersten Achsenrichtung liegt, und der Breite nach in der ersten Achsenrichtung schmaler ausgebildet ist als die anderen Sensorelektroden (221, 222, 321, 322),

wobei die Recheneinheit (530) angeordnet ist, um einen gewichteten Mittelwert einer repräsentativen Position jeder der Vielzahl abstastender Elektroden als eine Wertigkeit mittels eines Abtastsignals, das von mindestens einem der Vielzahl von Sensorelektroden erhalten wird, zu berechnen und die Tastposition zu bestimmen,

wobei eine repräsentative Position der Kantensensorelektrode (211, 212, 311, 312) der Kante in der ersten Achsenrichtung entspricht.

**2.** Berührungsempfindliches Gerät nach Anspruch 1, wobei die Kantensensorelektrode (211, 212, 311, 312) eine Breite in der ersten Achsenrichtung aufweist, die der Hälfte einer Breite in der ersten Achsenrichtung der anderen Sensorelektroden (221, 222, 321, 322) entspricht.

**3.** Berührungsempfindliches Gerät nach Anspruch 1, wobei die Bedienfeldeinheit (510) umfasst:

ein erstes Bedienfeld mit einer Vielzahl von ersten Sensorelektroden, die in einer Linie entlang der ersten Achse angeordnet sind; und

ein zweites Bedienfeld mit einer Vielzahl von zweiten Sensorelektroden, die in einer Linie entlang einer zweiten Achse, die die erste Achse schneidet, angeordnet sind.

**4.** Berührungsempfindliches Gerät nach Anspruch 1, wobei die Kantensensorelektrode (211, 212, 311, 312) eine Vielzahl von dreieckförmigen Einheitselektroden umfasst, die in einer die erste Achsenrichtung schneidenden zweiten Achsenrichtung verbunden sind.

**5.** Berührungsempfindliches Gerät nach Anspruch 1, wobei die Bedienfeldeinheit (510) mit einem einschichtigen Bedienfeld ausgeführt ist, das eine Oberfläche aufweist, auf der die Vielzahl von Sensorelektroden ausgebildet ist.

**6.** Berührungsempfindliches Gerät nach Anspruch 1, wobei die Vielzahl von Sensorelektroden mit unterschiedlichen Breiten in der ersten Achsenrichtung entlang der zweiten Achse, die die erste Achse schneidet, ausgebildet ist.

**7.** Berührungsempfindliches Gerät nach Anspruch 1, wobei eine Vielzahl von V-förmigen Elektroden, die in der Kantensensorelektrode enthalten sind, einen Bereich einnimmt, der kleiner ist als ein durch V-förmige Elektroden der anderen Sensorelektroden eingenommener Bereich.

8. Berührungsempfindliches Gerät nach Anspruch 1, wobei repräsentative Positionen der anderen Sensorelektroden einer mittleren Position in einer ersten Achsenrichtung jeder der anderen Sensorelektroden entsprechen.

9. Berührungsempfindliches Gerät nach Anspruch 1 mit einer Tastpositionsbestimmungsfunktion, wobei das berührungsempfindliche Gerät umfasst:

eine Recheneinheit (530), angeordnet zum Bestimmen einer ersten Achsenrichtungskomponente einer Tastposition auf der Bedienfeldeinheit, basierend auf von mindestens einer der Vielzahl von Sensorelektroden gesammelten Sensordaten und einer repräsentativen Position auf der jeder der Vielzahl von Sensorelektroden entsprechenden ersten Achse,
wobei die Recheneinheit (530) angeordnet ist zum Bestimmen einer repräsentative Position einer an einer Kante in einer ersten Achsenrichtung liegenden Kantensensorelektrode aus der Vielzahl von Sensorelektroden, die einer Kantenseite der Bedienfeldeinheit entspricht, und um die erste Achsenrichtungskomponente der Tastposition zu bestimmen.

10. Berührungsempfindliches Gerät nach Anspruch 9, wobei die Recheneinheit (530) angeordnet ist, um repräsentative Positionen von Sensorelektroden (221, 222, 321, 322) außer der Kantensensorelektrode (211, 212, 311, 312) zu bestimmen, die mit einer mittleren Position in einer ersten Achsenrichtung jeder der anderen Sensorelektroden übereinstimmen, und um die erste Achsenrichtungskomponente der Tastposition zu bestimmen.

11. Berührungsempfindliches Gerät nach Anspruch 9, wobei die Vielzahl von Sensorelektroden mit unterschiedlichen Breiten in der ersten Achsenrichtung entlang einer die erste Achse schneidenden, zweiten Achse ausgebildet ist.

12. Berührungsempfindliches Gerät nach Anspruch 9, wobei die Bedienfeldeinheit (510) umfasst:

ein erstes Bedienfeld mit einer Vielzahl von ersten Sensorelektroden, die in einer Linie entlang der ersten Achse angeordnet sind; und
ein zweites Bedienfeld mit einer Vielzahl von zweiten Sensorelektroden, die in einer Linie längs der die erste Achse schneidenden, zweiten Achse angeordnet sind.

13. Berührungsempfindliches Gerät nach Anspruch 9, wobei die Kantensensorelektrode (211, 212, 311, 312) eine Vielzahl von dreieckförmigen Einheitselektroden umfasst, die in einer die erste Achsenrichtung schneidenden, zweiten Achsenrichtung verbunden sind.

14. Berührungsempfindliches Gerät nach Anspruch 9, wobei die Bedienfeldeinheit (510) mit einem einschichtigen Bedienfeld ausgeführt ist, das eine Oberfläche aufweist, auf der die Vielzahl von Sensorelektroden ausgebildet ist.

15. Berührungsempfindliches Gerät nach Anspruch 9, wobei eine Vielzahl von V-förmigen Elektroden in der Kantensensorelektrode einen Bereich einnimmt, der kleiner ist als ein Bereich, der durch V-förmige Elektroden der anderen Sensorelektroden eingenommen wird.

16. Verfahren zur Herstellung eines berührungsempfindlichen Bedienfeldes für ein berührungsempfindliches Gerät nach einem der Ansprüche 1 bis 15, wobei das Verfahren umfasst:

Bilden einer Vielzahl von Sensorelektroden in einer Linie entlang einer ersten Achse auf einer Ebene unter Verwendung von leitfähigen Werkstoffen auf einer Oberfläche eines ersten nicht leitenden Substrats, wobei die Ebene das erste nicht leitende Substrat bildet,
wobei Bilden das Bilden einer Kantensensorelektrode (211, 212, 311, 312) umfasst, die sich in einer Kante in einer ersten Achsenrichtung befindet und in der Breite in der ersten Achsenrichtung schmaler ist als die Sensorelektroden (221, 222, 321, 322), außer der Kantensensorelektrode (211, 212, 311, 312) aus der Vielzahl von Sensorelektroden.

17. Verfahren nach Anspruch 16, des Weiteren umfassend:

Befestigen des ersten nicht leitenden Substrats, auf dem die Vielzahl von Sensorelektroden ausgebildet ist, an einer Oberfläche eines zweiten nicht leitenden Substrats.

18. Verfahren nach Anspruch 16, wobei das Bilden umfasst:

Bilden eines ersten Elektrodensatzes auf einer Oberfläche eines ersten Substrats, wobei der erste Elektrodensatz eine Vielzahl von ersten Sensorelektroden umfasst, die in einer Linie entlang der ersten Achse angeordnet sind;

Bilden eines zweiten Elektrodensatzes auf einer Oberfläche eines zweiten Substrats, wobei der zweite Elektrodensatz eine Vielzahl von zweiten Sensorelektroden umfasst, die in einer Linie entlang einer zweiten Achse angeordnet sind; und

Laminieren des ersten Substrats und des zweiten Substrats.

**Revendications**

1. Appareil de détection de toucher ayant une fonction de détermination de position de toucher, l'appareil de détection de toucher comprenant :

une unité en forme de panneau (510) comprenant une pluralité d'électrodes de détection agencées dans une ligne le long d'un premier axe ;

une unité de détection (520) pour collecter des données de détection indiquant un changement de capacité qui se produit dans chacune de la pluralité d'électrodes de détection, l'unité de détection étant connectée à la pluralité d'électrodes de détection ; et

une unité de calcul (530) pour déterminer une position de toucher sur l'unité en forme de panneau, à laquelle est appliqué un toucher d'un utilisateur, en se basant sur des données de détection collectées depuis au moins une électrode de détection parmi la pluralité d'électrodes de détection,

**caractérisé en ce que**

parmi la pluralité d'électrodes de détection, une électrode de détection de bordure (211, 212, 311, 312) est placée sur une bordure dans une première direction axiale, et est formée avec une largeur plus étroite dans la première direction axiale que les autres électrodes de détection (221,222,321,322),

dans lequel l'unité de calcul (530) est agencée pour calculer une moyenne pondérée d'une position représentative de chacune de la pluralité d'électrodes de détection en utilisant, à titre de pondération, un signal de détection acquis depuis au moins une de la pluralité d'électrodes de détection, et pour déterminer la position de toucher,

dans lequel une position représentative de l'électrode de détection de bordure (211, 212, 311, 312) correspond à la bordure dans la première direction axiale.

2. Appareil de détection de toucher selon la revendication 1, dans lequel l'électrode de détection de bordure (211, 212, 311, 312) a une largeur dans la première direction axiale qui est la moitié d'une largeur dans la première direction axiale des autres électrodes de détection (221,222,321,322).

3. Appareil de détection de toucher selon la revendication 1, dans lequel l'unité en forme de panneau (510) comprend :

un premier panneau comprenant une pluralité de premières électrodes de détection agencées dans une ligne le long du premier axe ; et

un second panneau comprenant une pluralité de secondes électrodes de détection agencées dans une ligne le long d'un second axe qui recoupe le premier axe.

4. Appareil de détection de toucher selon la revendication 1, dans lequel l'électrode de détection de bordure (211, 212, 311, 312) comprend une pluralité d'électrodes unitaires de forme triangulaire qui sont connectées dans une seconde direction axiale qui recoupe la première direction axiale.

5. Appareil de détection de toucher selon la revendication 1, dans lequel l'unité en forme de panneau (510) est configurée avec un panneau monocouche ayant une surface sur laquelle sont formées la pluralité d'électrodes de détection.

6. Appareil de détection de toucher selon la revendication 1, dans lequel la pluralité d'électrodes de détection sont formées avec différentes largeurs dans la première direction axiale le long du second axe qui recoupe le premier axe.

7.  Appareil de détection de toucher selon la revendication 1, dans lequel une pluralité d'électrodes scindées comprises dans l'électrode de détection de bordure occupent une aire plus petite qu'une aire occupée par des électrodes scindées des autres électrodes de détection.

8.  Appareil de détection de toucher selon la revendication 1, dans lequel des positions représentatives des autres électrodes de détection correspondent à une position centrale dans une première direction axiale de chacune des autres électrodes de détection.

9.  Appareil de détection de toucher selon la revendication 1, ayant une fonction de détermination de position de toucher, l'appareil de détection de toucher comprenant :

    une unité de calcul (530) agencée pour déterminer une composante dans une première direction axiale d'une position de toucher de l'unité en forme de panneau, en se basant sur des données de détection collectées depuis l'une au moins de la pluralité d'électrodes détection et
    une position représentative sur le premier axe correspondant à chacune de la pluralité d'électrodes de détection, dans lequel l'unité de calcul (530) est agencée pour déterminer une position représentative d'une électrode de détection de bordure située sur une bordure dans une première direction axiale, parmi la pluralité d'électrodes de détection, pour correspondre à un côté de bordure de l'unité en forme de panneau et pour déterminer la composante, dans la première direction axiale, de la position de toucher.

10. Appareil de détection de toucher selon la revendication 9, dans lequel l'unité de calcul (530) est agencée pour déterminer des positions représentatives des électrodes de détection (221, 222, 321, 322) autres que l'électrode de détection de bordure (211, 212, 311, 312) pour correspondre à une position centrale dans une première direction axiale de chacune des autres électrodes de détection, et pour déterminer la composante, dans la première direction axiale, de la position de toucher.

11. Appareil de détection de toucher selon la revendication 9, dans lequel la pluralité d'électrodes de détection sont formées avec différentes largeurs dans la première direction axiale le long d'un second axe qui recoupe le premier axe.

12. Appareil de détection de toucher selon la revendication 9, dans lequel l'unité en forme de panneau (510) comprend :

    un premier panneau comprenant une pluralité de premières électrodes de détection agencées dans une ligne le long du premier axe ; et
    un second panneau comprenant une pluralité de secondes électrodes de détection agencées dans une ligne le long du second axe qui recoupe le premier axe.

13. Appareil de détection de toucher selon la revendication 9, dans lequel l'électrode de détection de bordure (211, 212, 311, 312) comprend une pluralité d'électrodes unitaires de forme triangulaire qui sont connectées dans une seconde direction axiale qui recoupe la première direction axiale.

14. Appareil de détection de toucher selon la revendication 9, dans lequel l'unité en forme de panneau (510) est configurée avec un panneau monocouche ayant une surface sur laquelle sont formées la pluralité d'électrodes de détection.

15. Appareil de détection de toucher selon la revendication 9, dans lequel une pluralité d'électrodes scindées comprises dans l'électrode de détection de bordure occupent une aire plus petite qu'une aire occupée par les électrodes scindées des autres électrodes de détection.

16. Procédé de fabrication d'un panneau de détection de toucher pour un appareil de détection de toucher selon l'une des revendications 1 à 15, le procédé comprenant les étapes consistant à :

    former une pluralité d'électrodes de détection dans une ligne le long d'un premier axe sur un plan, en utilisant des matériaux conducteurs sur une surface d'un premier substrat non conducteur, le plan formant le premier substrat non conducteur,
    dans lequel l'étape de formation comprend de former une électrode de détection de bordure (211, 212, 311, 312) qui est située dans une bordure dans une première direction axiale et qui est plus étroite en largeur dans la première direction axiale que les électrodes de détection (221, 222, 321, 322) autres que l'électrode de détection de bordure (211, 212, 311, 312) parmi la pluralité d'électrodes de détection.

17. Procédé selon la revendication 16, comprenant en outre :

l'étape consistant à attacher le premier substrat non conducteur, sur lequel sont formées la pluralité d'électrodes de détection, sur une surface d'un second substrat non conducteur.

18. Procédé selon la revendication 16, dans lequel l'étape de formation comprend :

la formation d'un premier groupe d'électrodes sur une surface d'un premier substrat, le premier groupe d'électrodes comprenant une pluralité de premières électrodes de détection agencées dans une ligne le long du premier axe ;
la formation d'un second groupe d'électrodes sur une surface d'un second substrat, le second groupe d'électrodes comprenant une pluralité de secondes électrodes de détection agencées dans d'une ligne le long d'un second axe ; et
la stratification du premier substrat et du second substrat.

**FIG. 1**

**FIG. 2**

## FIG. 3

**FIG. 4**

```
┌──────────────┐   SENSOR    ┌──────────────┐
│              │   SIGNAL    │              │
│  PANEL UNIT  │ ──────────> │ SENSOR UNIT  │ ～ 520
│              │             │              │
└──────────────┘             └──────────────┘
        ～                          │
       510                          │ SENSOR DATA
                                    ▼
                            ┌──────────────┐
                            │  COMPUTING   │
                            │    UNIT      │ ～ 530
                            └──────────────┘
                                    │
                                    ▼
                            TOUCH POSITION
```

# FIG. 5

**FIG. 6**

**FIG. 7**

**FIG. 8**

**FIG. 9**

# FIG. 10

# FIG. 11

| FORM SENSOR ELECTRODES | S10 |

↓

| FORM WIRING PATTERN AND BONDING PAD | S20 |

↓

| BOND SUBSTRATE TO FPCB | S30 |

↓

| ATTACH SUBSTRATE ONTO WINDOW | S40 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070222766 A1
- WO 2009108765 A2
- US 2006023357 A1